# EUROPÄISCHE PATENTSCHRIFT

(11) **EP 3 929 106 B1**
(45) Veröffentlichungstag und Bekanntmachung des Hinweises auf die Patenterteilung: **14.01.2026**
(21) Anmeldenummer: 20181836.6
(22) Anmeldetag: 24.06.2020
(51) Int. Cl.: B65G 1/04, B65G 57/30

(54) **VERFAHREN ZUM BETREIBEN EINER LAGERANORDNUNG**
METHOD FOR OPERATING A STORAGE ASSEMBLY
PROCÉDÉ DE FONCTIONNEMENT D'UN AGENCEMENT D'ENTREPOSAGE

(43) Veröffentlichungstag der Anmeldung: 29.12.2021
(73) Patentinhaber: Jungheinrich Aktiengesellschaft, 22047 Hamburg (DE)
(72) Erfinder: Leiking, Dr.- Ing. Lars, 85435 Erding (DE); Seemüller, Dr.- Ing. Stefan, 85716 Unterschleißheim (DE); Dewitz, Marco, 85778 Haimhausen (DE)
(74) Vertreter: Keil & Schaafhausen Patentanwälte PartGmbB

(56) Entgegenhaltungen:
- EP-A1- 0 096 784
- EP-B1- 3 468 899
- WO-A1-2016/130338
- WO-A1-2019/140473
- WO-A1-2019/238697
- WO-A1-2020/074717
- CN-A- 110 861 865
- DE-A1- 102013 009 340
- DE-A1- 102018 127 567
- AMAZON B�ROBEDARF ET AL: "/Really-Useful-schwarz-Aufbewahrung-35-Liter/dp/B06Y2G9GWK 1/4 Zum Hauptinhalt wechseln Alle Bestseller AmazonBasics Angebote Prime Video Neuerscheinungen Liefern nach Niederlande Warenr�cksendungen", 21 May 2018 (2018-05-21), XP055774239, Retrieved from the Internet <URL:https://www.amazon.de/Really-Useful-schwarz-Aufbewahrung-35-Liter/dp/B06Y2G9GWK> [retrieved on 20210209]

## Beschreibung

Die vorliegende Erfindung betrifft ein Verfahren zum Betreiben einer Lageranordnung, bei dem Waren in einem Anlieferungsgebinde an einem Wareneingang in die Lageranordnung eingebracht werden, aus dem Anlieferungsgebinde entnommen werden, zwischengelagert werden und mit einer vorbestimmten Sequenz in einem Auslieferungsgebinde an einem Warenausgang aus der Lageranordnung ausgebracht werden.

Das Verfahren ist beispielsweise bei einer Lageranordnung im Bereich des Lebensmitteleinzelhandels anwendbar. Hier werden Waren von einem oder mehreren Herstellern angeliefert, wobei die Anlieferung beispielsweise auf Paletten erfolgt und jede Palette eine einzige Art von Waren enthält. Die Waren werden dann aus dem Anlieferungsgebinde entnommen. Dieser Vorgang wird auch als "Depalettierung" bezeichnet. Die depalettierten Waren werden zwischengelagert. Die Zwischenlagerung erfolgt beispielsweise dadurch, dass man die Ware in einen Transportbehälter oder ein transportfähiges Tablar überführt und den Transportbehälter oder das Tablar in einem Zwischenlager lagert. Das Zwischenlager ist vielfach als Hochregallager ausgebildet, das ein Regalbediengerät aufweist. Das Regalbediengerät lagert die Transportbehälter oder Tablare in das Hochregallager ein und entnimmt sie von dort.

Am Warenausgang müssen die Waren in einer vorbestimmten Sequenz in den Auslieferungsgebinden angeordnet werden. Die Sequenz berücksichtigt beispielsweise, dass schwere Waren in Schwerkraftrichtung unten angeordnet sind. Mechanisch wenig stabile Waren sollten beispielsweise in Schwerkraftrichtung möglichst weit oben angeordnet sein. Dementsprechend müssen die Waren in einer bestimmten Reihenfolge in die Auslieferungsgebinde eingebracht werden. Dies ist in der Regel nicht ohne weiteres möglich, wenn man die Waren direkt aus dem Hochregallager oder einem entsprechend flächig ausgebildeten Lager zum Warenausgang transportiert. Dementsprechend ist vor dem Warenausgang noch eine Pufferstation angeordnet, in der die Waren erneut zwischengelagert werden, um dann in der richtigen Sequenz im Auslieferungsgebinde zusammengestellt zu werden. Dies erfordert Bauraum und Lagerkomponenten, was die Kosten erhöht.

DE 10 2013 009 340 A1 beschreibt eine Einrichtung und ein Verfahren zum Ein- und Auslagern von stapelbaren Behältern. Dazu werden die stapelbaren Behälter mittels einer Hub- und Absenkvorrichtung übereinander und innerhalb der Lagerfläche in mehreren Reihen nebeneinander positioniert und zwischen vertikalen Lagersäulen seitlich geführt. Die Behälter werden über Transportfahrzeuge horizontal verfahren, wobei die Hub- und Absenkvorrichtung an den Transportfahrzeugen angeordnet ist. Dadurch kann ein Behälter eines Stapels von diesen entnommen und auch das Transportfahrzeug abgesenkt werden, während der darüberliegende Teil des Stapels von der Haltevorrichtung gehalten wird.

EP 3 468 899 B1 offenbart den Oberbegriff des Anspruchs 1 und beschreibt eine Rendezvous-Kommissionierung mit örtlich variablen Kommissionierstationen. Dabei analysiert eine Auftragsverwaltung eine Vielzahl von Kundenaufträgen und erstellt anhand der Analyseergebnisse Transportaufträge für Fahrzeuge.

Der Erfindung liegt die Aufgabe zugrunde, eine Lageranordnung kostengünstig herzustellen und/oder zu betreiben.

Diese Aufgabe wird mit der Erfindung durch die Merkmale des Anspruchs 1 gelöst.

Ein Blocklager kann auch als "Stapellager" oder "Behälterstapellager" bezeichnet werden. In einem Blocklager gibt es mehrere Stapelräume, die nach Art einer Matrix in Reihen und Spalten angeordnet sind. In jedem Stapelraum sind dann mehrere Packeinheiten übereinander angeordnet. Man ordnet die Packeinheiten also nicht nur zweidimensional an, sondern in einer dreidimensionalen Struktur. Auch ein Hochregallager hat in dieser Betrachtungsweise lediglich eine zweidimensionale Struktur, auch wenn die einzelnen Waren in mehreren Etagen übereinander angeordnet sind. In jeder Etage erfolgt aber wiederum nur eine zweidimensionale Anordnung der infrage stehenden Waren, so dass die dritte Dimension nur dadurch erreicht werden kann, dass man mit einem Regalbediengerät die Etagen einzeln anfährt. Dies wiederum führt dazu, dass man Positionen in dem Hochregallager nicht wahlfrei anfahren kann, weil man immer darauf achten muss, ob ein Regalbediengerät für eine gewünschte Position verfügbar ist und ob dieses Regalbediengerät nicht durch ein anderes Regalbediengerät, das sich beispielsweise in der gleichen Gasse in einem Hochregallager bewegt, behindert wird. Das Gleiche gilt auch für andere Lageranordnungen, bei denen die einzelnen Waren in einer oder mehreren Ebenen flächig angeordnet sind. Die Packeinheiten können unterschiedliche Formen aufweisen. Wesentlich ist, dass eine Packeinheit eine Ware aufnehmen kann und die Packeinheit auf einer anderen Packeinheit stapelbar ist, so dass mehrere Packeinheiten auch mit aufgenommener Ware einen Stapel bilden können.

Vorzugsweise enthalten die Packeinheiten in jedem Stapelraum die gleiche Art von Waren. Damit ergibt sich an jedem Punkt der Matrix, also an jedem Kreuzungspunkt von Reihen und Spalten, eine eindeutige Zuordnung zwischen Position und Ware. Dies macht es möglich, auf einfache Art und Weise die Waren in einer gewünschten Reihenfolge oder Sequenz abzuholen und zum Warenausgang zu bringen, so dass man bereits bei der Abholung die gewünschte Sequenzbildung erreichen kann.

Die Packeinheiten werden von unten in die Stapelräume eingebracht. Prinzipiell kann ein Blocklager von oben oder von unten versorgt werden. Wenn die Stapelräume von unten versorgt werden, also die Packeinheiten von unten in die Stapelräume eingebracht und auch nach unten aus den Stapelräumen entnommen werden, dann kann man die Packeinheiten unmittelbar auf eine Ebene weiter transportieren, die aus dem Blocklager hinausführt. Weitere Umsetzvorgänge sind dann nicht erforderlich.

Vorzugsweise werden die Packeinheiten mit Hilfe von Beschickungsfahrzeugen in die Stapelräume eingebracht und aus den Stapelräumen entnommen, die in einem Beschickungsraum unterhalb der Stapelräume verfahrbar sind. Mit Hilfe der Beschickungsfahrzeuge ist es auf einfache Weise möglich, jeden Stapelraum problemlos zu erreichen, d.h. anzufahren.

Hierbei ist bevorzugt, dass die Beschickungsfahrzeuge in mindestens zwei unterschiedlichen Richtungen verfahrbar sind. Die Beschickungsfahrzeuge können dann im Beschickungsraum zu jedem Stapelraum gesteuert werden, so dass sie, falls mehrere Beschickungsfahrzeuge im Einsatz sind, auch einander ausweichen können. Darüber hinaus wird die Entnahme von Packeinheiten mit entsprechenden Waren aus dem Blocklager sehr flexibel, was sich positiv auf die Sequenzbildung am Warenausgang auswirkt.

Vorzugsweise verwendet man die Beschickungsfahrzeuge, um die Packeinheiten zu einer dem Warenausgang vorgelagerten Sequenzbildungseinrichtung zu transportieren. Wenn man die Beschickungsfahrzeuge, die die Packeinheiten aus dem Blocklager entnehmen, auch außerhalb des Blocklagers verwenden kann, spart man sich einen weiteren Umsetzvorgang, so dass das Verfahren mit einem geringen Zeitaufwand und weniger technische Vorrichtungen arbeiten kann.

Vorzugsweise verwendet man Beschickungsfahrzeuge, die mehr als eine Packeinheit gleichzeitig transportieren können. Ein Beschickungsfahrzeug kann dementsprechend zunächst einen Stapelraum anfahren und dort eine oder mehrere Packeinheiten entnehmen. Das Beschickungsfahrzeug kann dann, falls noch Transportraum zur Verfügung steht, zu einem weiteren Stapelraum gefahren werden, um dort eine weitere Packeinheit aufzunehmen. Das Beschickungsfahrzeug muss dann nicht nach jeder Aufnahme einer Packeinheit zu der Sequenzbildungseinrichtung verfahren werden. Man kann das Beschickungsfahrzeug bereits für eine Vorsortierung der Packeinheiten verwenden. Das Beschickungsfahrzeug kann beispielsweise unterschiedliche Packeinheiten aus dem Blocklager entnehmen, beispielsweise dadurch, dass es unterschiedliche Stapelräume anfährt und dabei jeweils ein oder sogar mehrere Packeinheiten entnimmt.

Vorzugsweise verwendet man Beschickungsfahrzeuge, die Gestelle transportieren, wobei die Gestelle die Packeinheiten in die Stapelräume einbringen und aus den Stapelräumen entnehmen.

Die Gestelle besitzen vorzugsweise einen eigenen Hubantrieb mit eigener Energieversorgung für die mit dem Gestell verbundene Vorrichtung zum Anheben und Absenken der Packeinheiten und können Ein- und Auslagervorgänge somit vornehmen, während das Beschickungsfahrzeug woanders arbeitet, bis das jeweilige Gestell seine Ein- oder Auslagervorgänge abgeschlossen hat und wieder abgeholt werden kann.

Es ist in einer anderen Ausführungsform auch möglich, das die Gestelle keinen eigenen Hubantrieb für die Vorrichtung zum Anheben und Absenken der Packeinheiten besitzen, sondern durch eine geeignete Kupplungsvorrichtung mit einem Antrieb im Beschickungsfahrzeug gekoppelt werden. In diesem Fall bleibt das Beschickungsfahrzeug natürlich an Ort und Stelle, bis die Ein- oder Auslagervorgänge des Gestells abgeschlossen sind.

Auch andere Kombinationen von Antrieb und Energieversorgung der Gestelle mit Hubeinrichtung und Kopplung an das Beschickungsfahrzeug sind denkbar. Beispielsweise sei der Antrieb im Gestell und eine drahtlose oder kontaktgebundene Energieversorgung durch das Beschickungsfahrzeug oder über Kontakte oder Induktivschleifen im Boden erwähnt. Die Steuerung der Gestelle kann in diesen Fall durch drahtlose oder kontaktgebundene Signalübertragung vom Beschickungsfahrzeug oder einem zentralen Steuersystem erfolgen.

Vorzugsweise verwendet man eine Packeinheit, die mindestens zwei unterschiedliche Befüll-/Entnahmerichtungen aufweist. Damit wird das Einbringen und die Entnahme von Waren in und aus der Packeinheit weiter flexibilisiert.

Vorzugsweise verläuft eine erste Befüll-/Entnahmerichtung in Schwerkraftrichtung und eine zweite Befüll-/Entnahmerichtung senkrecht zur Schwerkraftrichtung. Man kann dann beispielsweise einen Automaten oder eine automatische Handhabungseinrichtung verwenden, um eine Ware von oben, also in Schwerkraftrichtung, in die Packeinheit einzulegen. Man kann die Ware dann beim Entnehmen quer zur Schwerkraftrichtung aus der Packeinheit herausnehmen oder schieben, so dass hier keine Kräfte zum Anheben der Ware erforderlich sind. Dies ist insbesondere dann von Vorteil, wenn man die Entnahme durch eine Bedienungsperson vornehmen lassen möchte. Man kann auch das Einlegen von der Seite und die Entnahme nach oben vorsehen oder Einlegen und Entnahme jeweils gleichartig von der Seite oder oben vorsehen.

Die Erfindung wird im Folgenden anhand von bevorzugten Ausführungsbeispielen in Verbindung mit der Zeichnung beschrieben. Hierin zeigen:
- Fig. 1: eine erste Ausführungsform einer Lageranordnung,
- Fig. 2: eine zweite Ausführungsform einer Lageranordnung,
- Fig. 3: eine erste Ausführungsform eines Beschickungsfahrzeugs,
- Fig. 4: eine zweite Ausführungsform eines Beschickungsfahrzeugs,
- Fig. 5: ein Beschickungsfahrzeug mit einem Gestell und
- Fig. 6: eine schematische Darstellung einer Packeinheit, und
- Fig. 7: eine dritte Ausführungsform einer Lageranordnung.

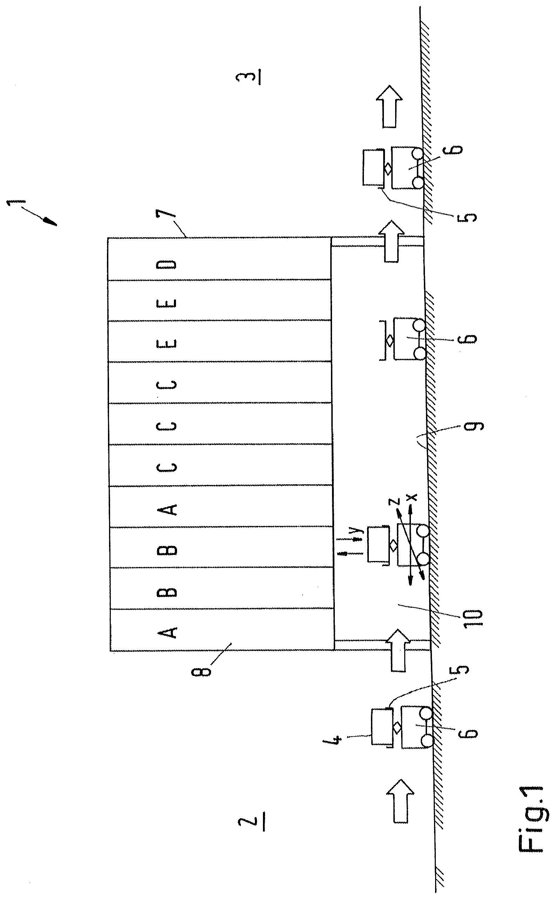

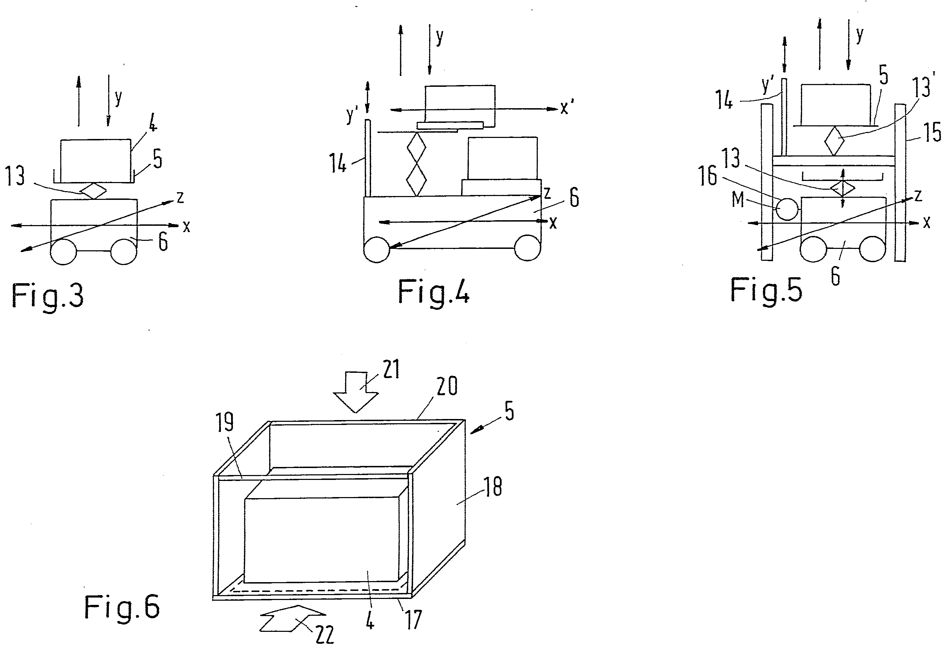

Fig 1 zeigt in schematischer Darstellung eine Lageranordnung 1 mit einem Wareneingang 2 und einem Warenausgang 3. Am Wareneingang 2 werden Waren 4 in die Lageranordnung 1 eingebracht und aus einem nicht näher dargestellten Anlieferungsgebinde entnommen. Das Anlieferungsgebinde kann beispielsweise eine Palette sein, auf der eine Vielzahl von gleichartigen Waren 4 angeordnet ist. Die Waren 4 werden aus dem Anlieferungsgebinde entnommen und in eine Packeinheit 5, die in Fig. 6 näher dargestellt ist, überführt. Die Packeinheit 5 wird mit Hilfe eines Beschickungsfahrzeugs 6, das als führerloses Transportfahrzeug ausgebildet ist, in ein Blocklager 7 transportiert. Das Blocklager 7 weist mehrere Stapelräume 8 auf, in denen die Packeinheiten 5 gestapelt werden können. Mit anderen Worten ist jeder Stapelraum 8 in der Lage, eine Mehrzahl von Packeinheiten 5 in Form eines Stapels aufzunehmen. Voraussetzung hierfür ist, dass die Packeinheiten 5 stapelbar sind. Zum Stapeln weisen sie deswegen eine in Schwerkraftrichtung unten angeordnete Stapelgeometrie auf, die mit einer in Schwerkraftrichtung oben an einer anderen Packeinheit vorgesehenen Stapelgeometrie zusammenwirkt. Zweckmäßigerweise sind alle Packeinheiten 5 gleich ausgebildet.

Die Packeinheiten 5 werden durch eine nicht näher dargestellte Halteeinrichtung am unteren Ende des jeweiligen Stapelraums 8 festgehalten. Hierzu wird die einzulagernde Packeinheit solange angehoben, bis sie die Halteeinrichtung passiert hat. Beim danach folgenden Absenken greift die Halteeinrichtung die dann unterste Packeinheit 5 und hält sie fest.

Zum Auslagern hebt das Beschickungsfahrzeug 6 die unterste Packeinheit in einem Stapelraum 8 an und zwar solange, bis diese Packeinheit 5 von der Halteeinrichtung freigekommen ist. Die Halteeinrichtung wird dann offengehalten, bis die unterste Packeinheit an ihr vorbei abgesenkt worden ist und greift dann die nächst darüberliegende Packeinheit, so dass diese bislang vorletzte Packeinheit dann die unterste Packeinheit 5 bildet.

Es kann auch vorgesehen sein, mehrere Packeinheiten 5 aus einem Stapel zu entnehmen. In diesem Fall muss ein Steuermechanismus vorgesehen sein, der die Halteeinrichtung solange offenhält, bis die gewünschte Anzahl von Packeinheiten aus dem jeweiligen Stapelraum 8 entnommen worden sind.

Das Beschickungsfahrzeug dient nicht nur dazu, die Packeinheit 5 in das Blocklager 7 einzubringen. Es dient auch dazu, die Packeinheit 5 wieder aus dem Blocklager 7 zu entnehmen und sie dem Warenausgang 3 zuzuführen.

Das Beschickungsfahrzeug 6 ist, wie dies in Fig. 1 mit den Pfeilen "X" und "Z" dargestellt ist, auf dem Fußboden 9 in zwei Richtungen verfahrbar. Im einfachsten Fall sind hier nur zwei Richtungen vorgesehen, die senkrecht aufeinander stehen. In einer etwas aufwändigeren Ausgestaltung kann vorgesehen sein, dass das Beschickungsfahrzeug 6 praktisch beliebig zweidimensional verfahren werden kann.

Das Beschickungsfahrzeug 6 kann ebenfalls verwendet werden, um die Packeinheit 5 aus dem Blocklager 7 herauszufahren und zum Warenausgang 3 zu transportieren.

Wie oben erwähnt, weist das Blocklager 7 mehrere Stapelräume 8 auf. Durch Buchstaben "A", "B", "C", "D" und "E" ist vereinfacht dargestellt, dass jede Packeinheit 5 Waren 4 der gleichen Art enthält. Jeder Stapelraum ist damit "artikelrein".

Die Stapelräume 8 sind nach Art einer Matrix in Spalten und Reihen angeordnet. Jeder Stapelraum 8 befindet sich damit an einem Schnittpunkt zwischen einer Spalte und einer Reihe.

Es ist also klar definiert, an welcher Position innerhalb der Matrix man welche der Waren A - E entnehmen kann. Da das Beschickungsfahrzeug 6 praktisch beliebig verfahrbar ist, können die Waren A - E in einer Reihenfolge entnommen werden, die für die spätere Sequenzierung der Waren 4 am Warenausgang 3 erforderlich ist. Der Warenausgang gibt also die Sequenz vor, mit der die Packeinheiten 5 aus dem Blocklager 7 entnommen werden.

Unterhalb der Stapelräume 8 ist ein Beschickungsraum 10 angeordnet, in den das Beschickungsfahrzeug 6 verfahrbar ist. Das Beschickungsfahrzeug 6 bringt die Packeinheiten 5 von unten in die Stapelräume 8 ein und entnimmt sie auch nach unten aus den Stapelräumen.

Das Beschickungsfahrzeug 6 kann nicht nur verwendet werden, um die Packeinheiten 5 in die Stapelräumen 8 einzubringen und von dort zu entnehmen. Im Ausführungsbeispiel, das in Fig. 1 dargestellt ist, kann das Beschickungsfahrzeug 6 auch verwendet werden, um die Packeinheiten 5 zum Warenausgang 3 zu transportieren.

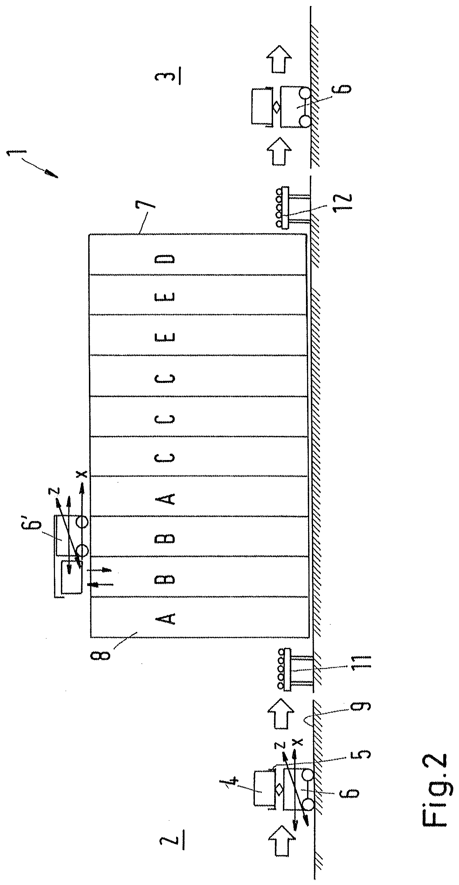

Fig. 2 zeigt eine abgewandelte Ausgestaltung einer Lageranordnung 1, bei der gleiche und einander entsprechende Elemente mit den gleichen Bezugszeichen versehen sind.

Das Blocklager 7 weist hier ebenfalls mehrere Stapelräume 8 auf, in denen Waren A - E angeordnet sind. Auch hier ist jeder Stapelraum 8 artikelrein.

Im Gegensatz zum Ausführungsbeispiel, das in Fig. 1 dargestellt ist, werden hier die Stapelräume 8 von oben beschickt. Hierzu ist ein Beschickungsfahrzeug 6' vorgesehen, das auf der in Schwerkraftrichtung oberen Seite des Blocklagers 7 verfahrbar ist.

Zum Transport einer mit einer Ware 4 versehenen Packeinheit 5 ist ein anderes Beschickungsfahrzeug 6 vorgesehen, das auf dem Fußboden 9 verfahrbar ist und die Packeinheit 5 vom Wareneingang 2 zu einer Bereitstellungsstation 11 transportiert. Von der Bereitstellungsstation 11 kann das Beschickungsfahrzeug 6' die Packeinheit 5 abholen und nach oben transportieren. Sobald die Packeinheit 5 oberhalb des Blocklagers 7 angekommen ist, kann sie auf die einzelnen Stapelräume 8 verteilt werden.

**In** ähnlicher Weise ist auf der anderen Seite des Blocklagers 7 eine Abgabestation 12 vorgesehen, auf der das Beschickungsfahrzeug 6' eine aus dem Blocklager 7 entnommene Packeinheit 5 abgeben kann. Von dort kann sie durch ein weiteres Beschickungsfahrzeug 6 zum Warenausgang 3 transportiert werden.

Die Anordnung der Bereitstellungstation 11 und der Abgabestation 12 auf unterschiedlichen Seiten des Blocklagers 7 erfolgt hier aus Gründen der Übersichtlichkeit. Die beiden Stationen können durchaus auf der gleichen Seite des Blocklagers 7 angeordnet sein. Sie können auch an Seiten angeordnet sein, die rechtwinklig zueinanderstehen.

Fig. 3 zeigt eine erste Ausführungsform eines Beschickungsfahrzeugs 6, das in die beiden Richtungen "X" und "Z" verfahrbar ist. Bezogen auf die Darstellung der Fig. 3 sind diese Richtungen von links nach rechts (Richtung "X") und senkrecht zur Zeichenebene (Richtung "Z"). Das Beschickungsfahrzeug 6 weist eine Hubeinrichtung 13 auf, mit der die Packeinheit 5 mit der Ware 4 in Schwerkraftrichtung und entgegen der Schwerkraftrichtung bewegt werden kann, was durch Pfeile "Y" dargestellt ist.

Wenn das Beschickungsfahrzeug 6 auf der Oberseite des Blocklagers 7 verfahren wird, dann erfolgt der Transport der Packeinheit 5 zum Einlagern nach unten und zum Auslagern nach oben. Dies ist in Fig. 3 nicht dargestellt.

Das in Fig. 3 dargestellte Beschickungsfahrzeug 6 kann eine einzelne Packeinheit 5 in das Blocklager 7 einlagern, von dort entnehmen und sie transportieren.

Fig. 4 zeigt eine abgewandelte Ausgestaltung, bei der das Beschickungsfahrzeug 6 zwei Packeinheiten gleichzeitig transportieren kann. Die Richtungsangaben entsprechen denen der Fig. 3.

Zusätzlich weist das Beschickungsfahrzeug 6 einen Offenhalter 14 auf, der in eine Richtung Y' bewegt werden kann, um die oben erwähnte Halteeinrichtung offen zu halten, bis die gewünschte Anzahl von Packeinheiten 5 entnommen worden ist.

Fig. 5 zeigt eine weitere Möglichkeit zum Transport von Packeinheiten 5.

Das Beschickungsfahrzeug 6 transportiert in diesem Fall ein Gestell 15, das wiederum die Packeinheiten 5 in den Stapelräumen 8 einlagert oder sie daraus entnimmt. Die Richtungsangaben entsprechen denen der Fig. 3.

Das Beschickungsfahrzeug 6 ist mit einem nicht gezeigten Motor versehen, der die Hubeinrichtung 13 betätigen kann.

Das Gestell 15 kann als "aktives Gestell" ausgeführt sein. In diesem Fall ist die Einheit 16 ein am Gestell angebrachter Motor mit Energieversorgung. Dadurch kann das Gestell autark ohne Hilfsantrieb durch das Fahrzeug Entnahme- und Abgabevorgänge ausführen, in dem der Motor M die mit dem Gestell 15 verbundene Hubeinheit 13' unterhalb der Verpackungseinheit 5 mittels einer nicht dargestellten mechanischen Kraftübertragungsvorrichtung bewegt.

Das Gestell 15 kann auch als "passives Gestell" ausgeführt sein. In diesem anderen Fall ist die Einheit 16 als eine Kupplungsvorrichtung ausgeführt, mittels der Antriebskraft und Energieversorgung für die Bewegung der Hubeinrichtung 13' durch das Fahrzeug 6 bereitgestellt wird. Der entsprechende Fahrzeugteil kuppelt an die Einheit 16 an, welche die mit dem Gestell 15 verbundene Hubeinheit 13' unterhalb der Verpackungseinheit 5 mittels einer nicht dargestellten mechanischen Kraftübertragungsvorrichtung bewegt.

Ein zu Fig.4 analoger Offenhalter 14 ist in diesen Fälle am Gestell 15 befestigt und erfüllt die oben beschriebene Funktion.

Fig. 6 zeigt ein Beispiel für eine Packeinheit 5 mit einer darin aufgenommenen Ware 4. Die Packeinheit weist einen Boden 17 auf, auf dem die Ware 4 ruht. Auf dem Boden stehen zwei Seitenwände 18 auf, die durch eine Strebe 19 an der Vorderseite und eine Rückwand 20 miteinander verbunden sein können. Die Rückwand 20 kann auch durch eine weitere Strebe 19 ersetzt sein. Die Seitenwände 8 sind höher als die Ware 4, so dass mehrere Packeinheiten 5 aufeinandergestapelt werden können. Im einfachsten Fall bildet die Unterseite der Packeinheit 5 eine ebene Geometrie, die mit einer entsprechend ebenen Geometrie an der Oberseite einer anderen Packeinheit zusammenwirken kann, um einen Stapel zu bilden.

In nicht näher dargestellter Weise kann an der Strebe 19 auch eine klappbare Wand befestigt sein.

Der Boden 17 kann eine Rutschsicherung für die Ware 4 aufweisen. Darüber hinaus kann ein integriertes Absenkelement vorgesehen sein, mit dem die Ware 4 bei Entnahme angehoben werden kann. Auch kann der Boden 17 Schlitze aufweisen, in die Lastaufnahmemittel eingreifen können oder andere Aussparungen, die das Einfahren von Hubstempeln ermöglichen.

Die Packeinheit 5 weist zwei Befüll-/Entnahmerichtungen 21, 22 auf, die senkrecht zueinanderstehen. Mit der Befüll-/Entnahmerichtung 21 kann die Ware 4 von oben in die Packeinheit 5 eingelegt oder von dort entnommen werden, beispielsweise mit einem Greifer. Die andere Befüll-/Entnahmerichtung 22 ist senkrecht dazu gerichtet, also auch senkrecht zur Schwerkraftrichtung. Damit ist es möglich, die Ware 4 durch Schieben oder Ziehen aus der Packeinheit 5 zu entnehmen oder sie dort einzubringen.

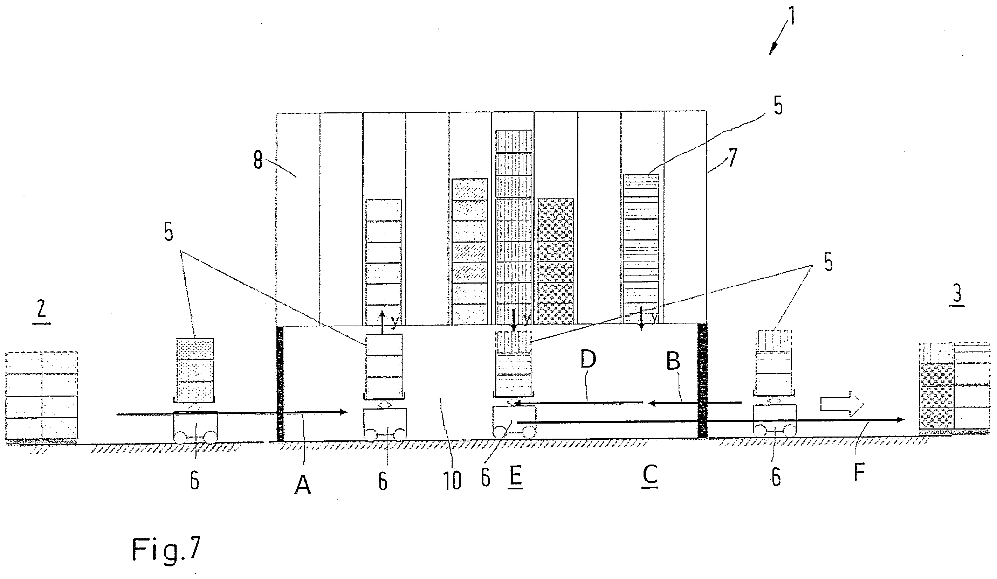

Fig. 7 zeigt eine dritte Ausführungsform einer Lageranordnung 1. Gleiche und funktionsgleiche Elemente sind mit den gleichen Bezugszeichen versehen.

Die Lageranordnung 1 weist wiederum ein Blocklager 7 auf mit mehreren Stapelräumen 8, in denen die Packeinheiten 5 gestapelt werden können. Durch unterschiedliche Schraffuren sind Packeinheiten 5 dargestellt, die jeweils unterschiedliche Gegenstände oder Waren enthalten. Dementsprechend ist in jedem Stapelraum 8 nur eine Art von Ware oder Gegenständen angeordnet. Die Stapelräume 8 sind somit sortenrein.

Der Beschickungsraum 10 unterhalb der Stapelräume 8 ist hier so ausgebildet, dass es möglich ist, ein Beschickungsfahrzeug 6 mit mehreren Packeinheiten 5 unterhalb der Stapelräume 8 hin und her zu fahren. Dies hat mehrere Vorteile.

Wie in der linken Hälfte von Fig. 7 zu erkennen ist, kann ein Beschickungsfahrzeug 6 aus dem Wareneingang 2 mehrere gleichartige Packeinheiten 5 entnehmen und zu einem Stapelraum 8 transportieren. Die Befüllung des Stapelraums 8 mit gleichartigen Packeinheiten 5 lässt sich dann in einer kürzeren Zeit bewerkstelligen.

Dies ist durch einen Pfeil A dargestellt.

In der rechten Hälfte von Fig. 7 ist ein Auslagervorgang dargestellt.

Ein Beschickungsfahrzeug 6 wird in Richtung eines Pfeils B in den Beschickungsraum 10 eingefahren und zwar bis zu einer Position C, wo es erste Packeinheiten 5 abholen kann. Im vorliegenden Ausführungsbeispiel holt das Beschickungsfahrzeug 6 hier zwei Packeinheiten 5 ab.

Das Beschickungsfahrzeug 6 wird dann (Pfeil D) zu einer weiteren Position E verfahren, in der es eine weitere Packeinheit 5 abholen kann, die jedoch eine andere Art von Waren oder Gegenständen enthält. Der Stapel mit den unterschiedlichen Packeinheiten (zwei gleichartige und eine andere Packeinheit 5) kann dann zum Warenausgang 3 verfahren werden (Pfeil F). Damit ist es möglich, bereits beim Einsammeln der Packeinheiten 5 eine Sequenzierung vorzunehmen, so dass die Kommissionierung am Warenausgang 3 weiter vereinfacht und beschleunigt werden kann.

In allen Ausführungsformen ist es bevorzugt, wenn die Stapelräume 8 nur mit gleichartigen Packeinheiten 5 befüllt werden, also eine sortenreine Füllung aufweisen.

Man kann allerdings auch vorsehen, dass es "gemischte" Stapelräume 8 gibt, so dass die Beschickungsfahrzeuge 6 durch Umlagern Zugriff auf eine Packeinheit 5 innerhalb eines Stapels erlangen, die nicht am unteren Ende eines Stapelraums 8 angeordnet ist. Eine derartige Situation kann auftreten, wenn die Ausnutzung des Lagervolumens wichtiger ist als kurze Fahrzeiten je Beschickungsfahrzeug und Auftrag.

Mit dem Blocklager 7 ist es möglich, die Sequenzierung der Waren ohne zusätzliches Pufferlager und damit ohne zusätzlichen Flächenbedarf zu realisieren.

## Patentansprüche

1. Verfahren zum Betreiben einer Lageranordnung (1), bei dem Waren (4) in einem Anlieferungsgebinde an einem Wareneingang (2) in die Lageranordnung (1) eingebracht werden, aus dem Anlieferungsgebinde entnommen werden, zwischengelagert werden und mit einer vorbestimmten Sequenz in einem Auslieferungsgebinde an einem Warenausgang (3) aus der Lageranordnung (1) ausgebracht werden, wobei man die Waren (4) aus dem Anlieferungsgebinde in eine stapelbare Packeinheit (5) überführt **dadurch gekennzeichnet, dass** man die Packeinheit (5) in einem Blocklager (7) zwischenlagert, wobei das Blocklager (7) mehrere Stapelräume (8) aufweist und jeder Stapelraum (8) zur Aufnahme eines Stapels von Packeinheiten (5) ausgebildet ist, wobei die Packeinheiten (5) von unten in die Stapelräume (8) eingebracht werden, wobei man die Waren (4) mit einer vom Warenausgang vorbestimmten Sequenz aus dem Blocklager (7) entnimmt.

2. Verfahren nach Anspruch 1, **dadurch gekennzeichnet, dass** die Packeinheiten (5) in jedem Stapelraum (8) die gleiche Art von Waren (4) enthalten.

3. Verfahren nach Anspruch 1 oder 2, **dadurch gekennzeichnet, dass** die Packeinheiten (5) mit Hilfe von Beschickungsfahrzeugen (6) in die Stapelräume (8) eingebracht und aus den Stapelräumen (8) entnommen werden, die in einem Beschickungsraum (10) unterhalb der Stapelräume (8) verfahrbar sind.

4. Verfahren nach Anspruch 3, **dadurch gekennzeichnet, dass** die Beschickungsfahrzeuge (6) in mindestens zwei unterschiedlichen Richtungen verfahrbar sind.

5. Verfahren nach Anspruch 3 oder 4, **dadurch gekennzeichnet, dass** man die Beschickungsfahrzeuge (6) verwendet, um die Packeinheiten (5) zu einer dem Warenausgang (3) vorgelagerten Sequenzbildungseinrichtung zu transportieren.

6. Verfahren nach einem der Ansprüche 3 bis 5, **dadurch gekennzeichnet, dass** man Beschickungsfahrzeuge (6) verwendet, die mehr als eine Packeinheit (5) gleichzeitig transportieren können.

7. Verfahren nach einem der Ansprüche 3 bis 6, **dadurch gekennzeichnet, dass** man Beschickungsfahrzeuge (6) verwendet, die Gestelle (15) transportieren, wobei die Gestelle (15) die Packeinheiten (5) in die Stapelräume (8) einbringen und aus den Stapelräumen (8) entnehmen.

8. Verfahren nach Anspruch 7, **dadurch gekennzeichnet, dass** man Gestelle verwendet, die einen eigenen Hubantrieb, gegebenenfalls mit eigener Energieversorgung, für die mit dem Gestell verbundene Vorrichtung zum Anheben und Absenken der Packeinheiten aufweisen.

9. Verfahren nach Anspruch 7, **dadurch gekennzeichnet, dass** man Gestelle verwendet, die durch eine Kupplungsvorrichtung mit einem Antrieb im Beschickungsfahrzeug gekoppelt werden, um die mit dem Gestell verbundene Vorrichtung zum Anheben und Absenken der Packeinheiten zu betätigen.

10. Verfahren nach einem der Ansprüche 1 bis 9, **dadurch gekennzeichnet, dass** man eine Packeinheit (5) verwendet, die mindestens zwei unterschiedliche Befüll/Entnahmerichtungen (21, 22) aufweist.

11. Verfahren nach Anspruch 10, **dadurch gekennzeichnet, dass** eine erste Befüll/Entnahmerichtung (21) in Schwerkraftrichtung und eine zweite Befüll/Entnahmerichtung (22) senkrecht zur Schwerkraftrichtung verläuft.

## Claims

1. Method for operating a storage assembly (1), in which goods (4) are brought into the storage assembly (1) in a delivery container at a goods receiving area (2), removed from the delivery container, temporarily stored, and removed from the storage assembly (1) in a delivery container at a outgoing goods area (3) in a predetermined sequence, wherein the goods (4) are transferred from the delivery container into a stackable packing unit (5), **characterized in that** the packing unit (5) is temporarily stored in a block storage (7), wherein the block storage (7) has several stacking spaces (8) and each stacking space (8) is designed to accommodate a stack of packaging units (5), the packaging units (5) being inserted into the stacking spaces (8) from below, wherein the goods (4) are removed from the block storage (7) in a sequence predetermined by the outgoing goods area.

2. Method according to claim 1, **characterized in that** the packing units (5) in each stacking space (8) contain the same type of goods (4).

3. Method according to claim 1 or 2, **characterized in that** the packing units (5) are introduced into the stacking spaces (8) and removed from the stacking spaces (8) with the aid of feeding vehicles (6), which are movable in a feeding space (10) below the stacking spaces (8).

4. Method according to claim 3, **characterized in that** the loading vehicles (6) can be moved in at least two different directions.

5. Method according to claim 3 or 4, **characterized in that** the feeding vehicles (6) are used to transport the packing units (5) to a sequence formation device upstream of the outgoing goods area (3).

6. Method according to one of claims 3 to 5, **characterized in that** loading vehicles (6) are used which can transport more than one packaging unit (5) at a time.

7. Method according to one of claims 3 to 6, **characterized in that** feeding vehicles (6) are used which transport racks (15), wherein the racks (15) place the packing units (5) into the stacking spaces (8) and remove them from the stacking spaces (8).

8. Method according to claim 7, **characterized in that** racks are used which have their own lifting drive, optionally with their own power supply, for the device connected to the rack for lifting and lowering the packaging units.

9. Method according to claim 7, **characterized in that** racks are used which are coupled to a drive in the loading vehicle by means of a coupling device in order to operate the device connected to the rack for raising and lowering the packaging units.

10. Method according to one of claims 1 to 9, **characterized in that** a packing unit (5) is used which has at least two different filling/removal directions (21, 22).

11. Method according to claim 10, **characterized in that** a first filling/removal direction (21) runs in the direction of gravity and a second filling/removal direction (22) runs perpendicular to the direction of gravity.

## Revendications

1. Procédé de fonctionnement d'un agencement d'entreposage (1), pour lequel des marchandises (4) sont placées dans un emballage de livraison d'arrivée à une entrée de marchandises (2) dans l'agencement d'entreposage (1), sont prélevées de l'emballage de livraison d'arrivée, sont placées en entreposage provisoire et sont extraites de l'agencement d'entreposage (1) à une séquence prédéterminée dans un emballage de livraison de sortie à une sortie de marchandises (3), sachant que l'on transfère les marchandises (4) de l'emballage de livraison d'arrivée dans une unité d'emballages (5) empilable, **caractérisé en ce que** l'on entrepose de façon provisoire l'unité d'emballages (5) dans un entreposage en blocs (7), sachant que l'entreposage en blocs (7) comporte plusieurs espaces d'empilage (8) et chaque espace d'empilage (8) est constitué pour loger une pile d'unités d'emballages (5), sachant que les unités d'emballages (5) sont placées par en dessous dans les espaces d'empilage (8), sachant que l'on enlève les marchandises (4) de l'entreposage en blocs (7) à une séquence prédéterminée par la sortie de marchandises.

2. Procédé selon la revendication 1, **caractérisé en ce que** les unités d'emballages (5) contiennent le même type de marchandises (4) dans chaque espace d'empilage (8).

3. Procédé selon la revendication 1 ou 2, **caractérisé en ce que** les unités d'emballages (5) sont placées dans les espaces d'empilage (8) et sont enlevées des espaces d'empilage (8) à l'aide des véhicules de chargement (6), qui peuvent être déplacés dans un espace de chargement (10) en dessous des espaces d'empilage (8).

4. Procédé selon la revendication 3, **caractérisé en ce que** les véhicules de chargement (6) peuvent être déplacés dans au moins deux directions différentes.

5. Procédé selon la revendication 3 ou 4, **caractérisé en ce qu'**on utilise les véhicules de chargement (6) pour transporter les unités d'emballages (5) vers un dispositif de formation de séquence entreposé en amont de la sortie de marchandises (3).

6. Procédé selon l'une quelconque des revendications 3 à 5, **caractérisé en ce qu'**on utilise des véhicules de chargement (6), qui peuvent transporter simultanément plus d'une unité d'emballages (5).

7. Procédé selon l'une quelconque des revendications 3 à 6, **caractérisé en ce qu'**on utilise des véhicules de chargement (6), qui transportent des châssis (15), sachant que les châssis (15) placent les unités d'emballages (5) dans les espaces d'empilage (8) et les enlèvent des espaces d'empilage (8).

8. Procédé selon la revendication 7, **caractérisé en ce qu'**on utilise des châssis, qui comportent un système d'entraînement de levage propre, le cas échéant avec une alimentation en énergie propre, pour le dispositif relié au châssis pour lever et baisser les unités d'emballages.

9. Procédé selon la revendication 7, **caractérisé en ce qu'**on utilise des châssis, qui sont couplés par un dispositif d'accouplement à un système d'entraînement dans le véhicule de chargement pour actionner le dispositif relié au châssis pour lever et baisser les unités d'emballages.

10. Procédé selon l'une quelconque des revendications 1 à 9, **caractérisé en ce qu'**on utilise une unité d'emballages (5), qui comporte au moins deux directions de remplissage/d'enlèvement (21, 22) différentes.

11. Procédé selon la revendication 10, **caractérisé en ce qu'**une première direction de remplissage/d'enlèvement (21) passe en direction de la gravité et une deuxième direction de remplissage/d'enlèvement (22) perpendiculairement à la direction de gravité.
